# EUROPEAN PATENT APPLICATION

(11) **EP 1 622 001 A2**
(43) Date of publication of application: **01.02.2006**
(21) Application number: 04257223.0
(22) Date of filing: 22.11.2004
(51) Int. Cl.: G06F 9/38

(54) **Branch prediction device and control method thereof**

(30) Priority: 30.07.2004 JP 2004224157
(71) Applicant: FUJITSU LIMITED, Kawasaki-shi, Kanagawa 211-8588 (JP)
(72) Inventor: Yokoi, Megumi, c/o Fujitsu Limited, Kawasaki-shi Kanagawa 211-8588 (JP)
(74) Representative: Stebbing, Timothy Charles

(57) **Abstract**

A branch prediction device (30) comprises a branch history storage device (31) for storing branch history information in order to predict branch behavior, an error detection mechanism (32) for detecting a reading error of the branch history information, and an erasure mechanism (36) for erasing the storage region of the branch history information in which the reading error is detected.

## Description

The present invention relates to both a branch prediction technology and an information processing technology, more particularly to a technology applied to an error processing technology or the like in a branch prediction mechanism or the like installed in an information processing device.

In an information processing device, such as a microprocessor which performs a pipeline process in a calculation unit, since several instructions are simultaneously executed in a kind of assembly-line operation, when processing jumps to another area in memory according to a branch instruction, all subsequent instructions that are determined not to be branched and pre-fetched must be discarded. This degrades the processing efficiency. For avoiding this, a branch prediction technology for predicting the branch target of a branch instruction and pre-fetching an instruction string with the branch target to a pipeline is known. For example, a pair of the address of a branch instruction and the previous branch target address of the branch instruction are stored as branch history information in advance, and when encountering the branch instruction, disruption of pipeline processing due to the branch instruction is prevented and performance degradation is avoided by performing branch prediction according to the branch history information and pre-fetching an instruction string after the predicted branch address.

Conventionally, there was no means for intentionally erasing branch history information when an error, such as bit inversion due to cosmic rays (software error) or the like occurs in a storage device for storing the branch history information. In this case, there is no other way but to wait for valid data to overwrite the branch history information, and if such an error occurs, an error report is issued every time there is an access to the failed point. If there is an error report, usually a part of the circuit or the entire circuit is stopped to execute data scanning for checking the error factor. Specifically, every time there is an access to the failed point, already scanned data is re-scanned again needlessly.

The full stoppage of the circuit incurs great damage, and even its partial stoppage disturbs another error detection or incurs performance degradation by causing extra circuit operations. Therefore, its influence is far-reaching and undesirable.

Patent Reference 1 discloses a failure processing method provided with a nullification means for nullifying an entry designated by an entry address and also making the entry unusable when an error is detected in a branch history table.

Patent Reference 2 discloses a technology for configuring the circuit in such a way that each entry may include a bit indicating its failure state in accordance with a plurality of levels in a branch history table set at the plurality of levels and determining whether the entry can be used, by using the bit.

Patent Reference 3 discloses a technology for providing a branch history table with information for determining the validity/invalidity of each entry, based on the existence/non-existence of its error.

Patent Reference 4 discloses a technology for providing a check circuit for checking the existence /non-existence of an error in a branch instruction address for the reading route of a branch instruction address from a branch history table, and improving the probability of a re-start by stopping the supply of a subsequent branch instruction address from the branch history table when detecting an error, and re-starting the supply of instructions after processing the error.

However, in the technologies disclosed by these Patent References 1 to 3, an entry cannot be permanently used even when the error is a transitional error, such as a software error or the like, and the serviceability of the branch history table degrades, which is a problem.

The technology disclosed by Patent Reference 4 is a countermeasure after an error occurs in the branch history table, and cannot solve the above-mentioned problem, such as the full stoppage of the circuit due to a transitional error in the branch history table.
Patent Reference 1: Japanese Patent Application No. 3-48335
Patent Reference 2: Japanese Patent Application No. 3-257526
Patent Reference 3: Japanese Patent Application No. 4-273528
Patent Reference 4: Japanese Patent Application No. 5-233282

It is therefore desirable to prevent the performance degradation of an information processing device due to a transitional or fixed reading error of a branch prediction device.

It is further desirable to provide a variety of countermeasures against a transitional or fixed reading error in a branch prediction device, in accordance with a variety of states of an information processing device in which a branch prediction device is installed.

The first aspect of the present invention provides a branch prediction device. The branch prediction device comprises a branch history storage device for storing branch history information in order to predict branch behavior, an error detection mechanism (failure detection unit) for detecting a reading error of the branch history information and an erasure mechanism (writing index generation unit) for erasing the branch history information in which the reading error is detected. Erasure of the branch history information may be performed by erasing an entire storage region (greater in extent than the information itself) within which the branch history information is located. Alternatively, only that part of the storage region occupied by the information may be selectively erased.

The second aspect of the present invention provides a control method for controlling a branch prediction device comprising a branch history storage device for storing branch history information in order to predict branch behavior. The control method provides an error detection step for detecting a reading error of the branch history information, and an erasing step for erasing the branch history information in which the reading error is detected.

The third aspect of the present invention provides an information processing device comprising a calculation (execution) unit for executing an instruction, an instruction fetch control unit for (controlling the) pre-fetching of an instruction inputted to an operation unit, and a branch prediction device for predicting the branch target address of a branch instruction when the instruction prefetched by the instruction fetch control unit is a branch instruction.

The branch prediction device comprises a branch history storage device for storing branch history information in order to predict branch behavior, an error detection mechanism for detecting a reading error of the branch history information, and an erasure mechanism for erasing the storage region of the branch history information in which the reading error is detected.

As described above, in the present invention, data in which an error is detected and whose error is reported once is erased in order to prevent a second error report, since harmless data cannot be generated from the data except in a case where failure data can be reproduced by an error correction code (ECC). The erasure is performed by writing all zero data. If the error is erased, the data can be usually used again as long as the error is a simple temporary error, that is, a software error. Therefore, the erasure of error data is very useful compared with the prevention of multiple error reporting.

Furthermore, if the error is a fixed one, the error is repeatedly detected although the error is erased. If an error is frequently detected although the error is repeatedly erased, it can be considered that the error is a fixed one. Therefore, if the number of errors is counted, it can be determined whether the error is a software error. If it can be determined that the error is a fixed one, a failed storage device can be detected and exchanged earlier than is otherwise possible.

For example, a parity bit for detecting an error in the branch history storage device is provided for each data type and each specific number of bits in the same data group. In this case, what is the minimum erasure range when a parity error occurs depends on the implementation of the branch history storage device. If one time of reading of the storage device requires all data in the same data group, it is meaningless to erase specific data even when a parity error occurs only in the data since partial erasure is invalid. In such a case, the entire data group is erased. Alternatively, if there is valid information belonging to the data group, the valid information is nullified.

Furthermore, the logical group of stored data does not always coincide with its physical group. If data can be erased for each logical group physically, the data can be erased for each logical group. However, if it is impossible, data must be erased for each physical group. When erasing data for each physical group, sometimes a range wider than the essential range to be erased must be erased. In that case, a disadvantage may accompany the erasure. Therefore, the implementation must be carefully considered.

In this case, for example, a specific register must be provided and one of several methods must be selectively implemented based on the setting of this register. For example, there are the following choices in the erasure of error data.
(1) Only the minimum logical data unit including a point in which an error is detected or an erasable physical data unit including the minimum logical data group is erased.
(2) A single storage device in which an error is detected is erased.
(3) No point in which an error is detected is erased.

The most economical and effective erasure method is the erasure of only the minimum data group including a failed point (1). In this case, only the valid information of error data might be enough to be erased, depending on the format of a storage device.

If the erasure of a single device (2) is adopted, a measure for preventing the use of the branch storage device must be taken during the entire erasure period.

The choice of no erasure (3) has the following effects. Namely, although erasure is a measure to prevent performance degradation, the storage device cannot be used during the erasure operation. Therefore, sometimes the erasure operation reduces the frequency of use of the storage device and it cannot be denied that there is a possibility of degrading performance.

This is because there is no need to erase if there are no repeated accesses to a failed point. If the option to choose no erasure is kept, performance can be compared between the case of erasure and the case of no erasure, and information for improving a branch prediction device in the future can be collected.

Reference will now be made, by way of example only, to the accompanying drawings, in which:
Fig. 1 shows one configuration of a branch prediction device which is one preferred embodiment of the present invention;
Fig. 2 shows the concept of branch prediction in an information processing device including the branch prediction device of Fig. 1;
Fig. 3 shows the concept of one structure of stored data in a branch history storage device provided for the branch prediction device of Fig. 1;
Fig. 4 is a block diagram showing one configuration of the information processing device of Fig. 2 including the branch prediction device of Fig. 1;
Fig. 5 is a flowchart showing the respective functions of the information processing device of Fig. 2 and branch prediction device of Fig. 1, in an execution process for performing instruction fetch;
Fig. 6 is a flowchart showing the respective functions of the information processing device of Fig. 2 and branch prediction device of Fig. 1 in a reference process; and
Fig. 7 is a flowchart showing the respective functions of the information processing device of Fig. 2 and branch prediction device of Fig. 1 in an error determination process.

The preferred embodiments of the present invention are described in detail below with reference to the drawings.

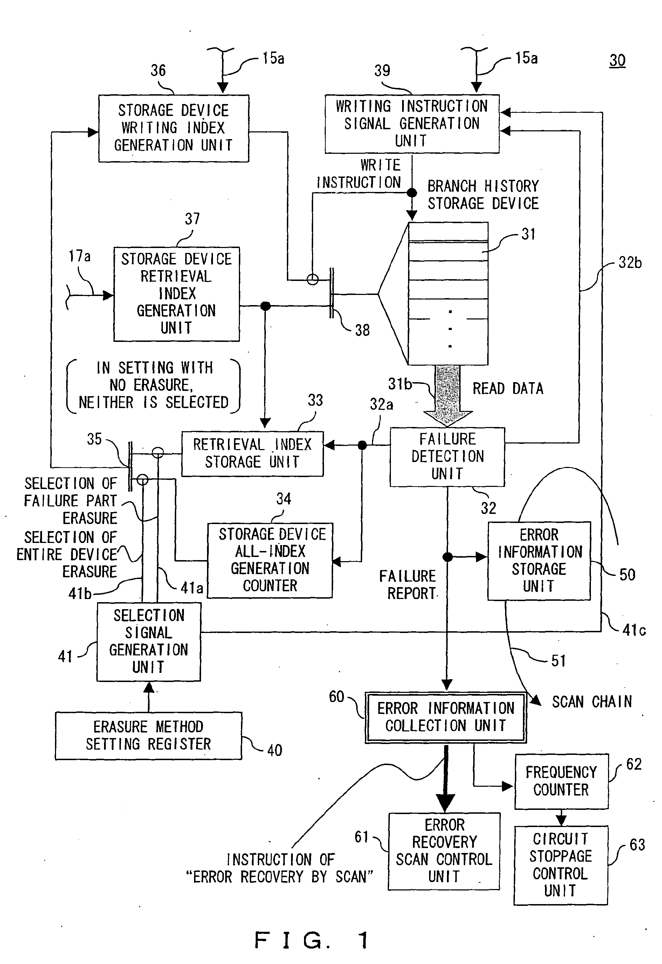

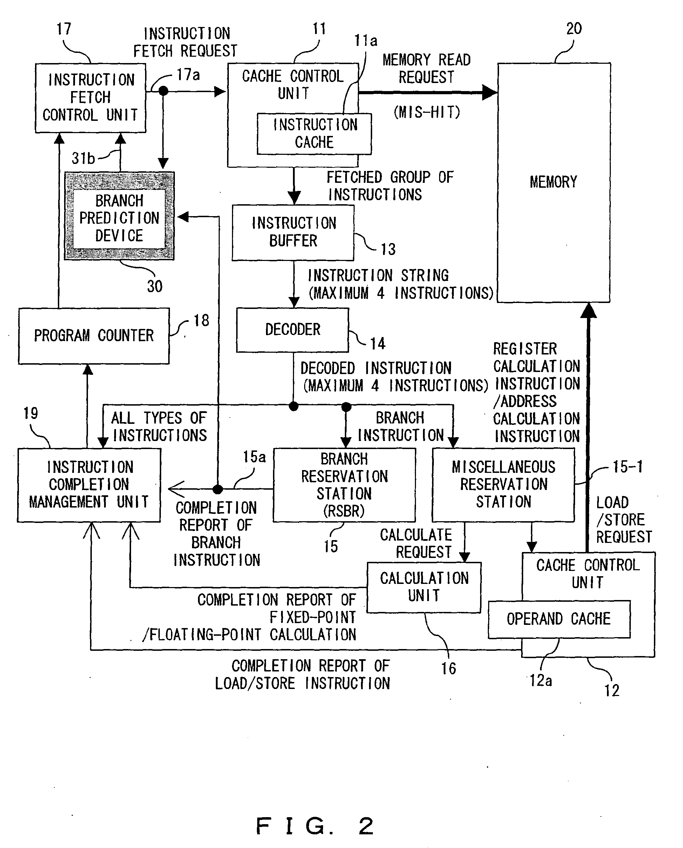

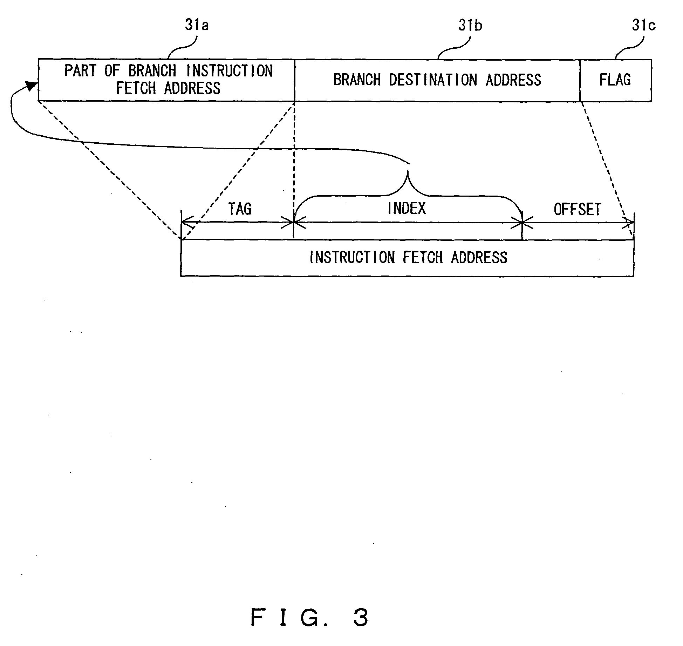

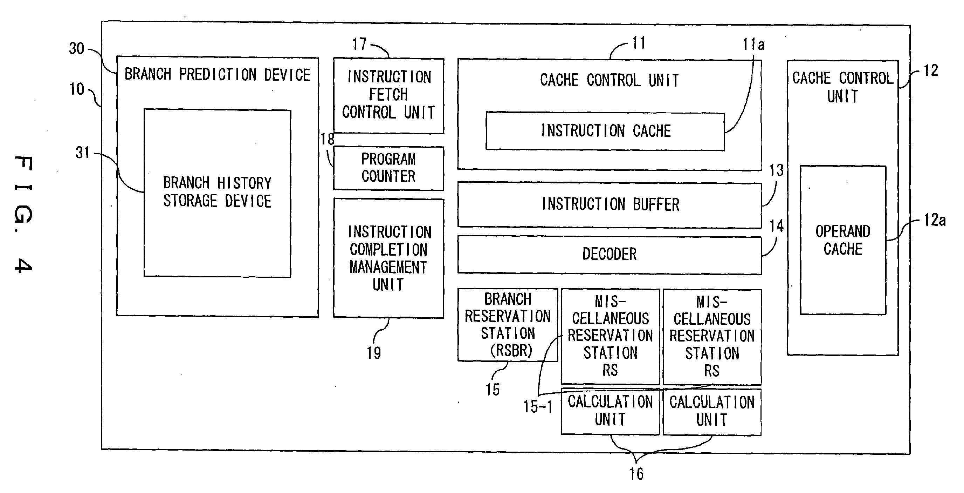

Fig. 1 shows one configuration of a branch prediction device which is one preferred embodiment of the present invention. Fig. 2 shows the concept of branch prediction in an information processing device including the branch prediction device of Fig. 1. Fig. 3 shows the concept of one structure of stored data in a branch history storage device provided for the branch prediction device of Fig. 1. Fig. 4 is a block diagram showing one configuration of the information processing device of Fig. 2 including the branch prediction device of Fig. 1.

Firstly, as shown in Fig. 4, the information processing device 10 of this preferred embodiment comprises a cache control unit 11 provided with instruction cache 11a for pre-fetching an instruction from external main memory (memory 20), a program counter 18 for generating the read address of an instruction, an instruction fetch control unit 17 for controlling the pre-fetching of an instruction from the main memory to the cache control unit 11, based on the value of this program counter 18, and a cache control unit 12 provided with an operand cache unit 12a for reading/writing data with the main memory.

After the cache control unit 11, an instruction buffer 13 for temporarily storing instructions read from the instruction cache 11a, a decoder 14 for decoding instructions read from this instruction buffer 13, a branch reservation station 15 for storing a branching instruction of the decoded instructions, a miscellaneous reservation station 15-1 for storing instructions other than the branching instruction, and a plurality of systems of execution (calculation) units 16 are provided.

An instruction completion management unit 19 for managing the completion states of a branching instruction and all the other instructions, and a branch prediction device 30 for predicting branching as described later, using the completion information from the branch reservation station 15, are also provided.

The instruction fetch control unit 17 issues an instruction fetch request 17a to the instruction cache 11a, as shown in Fig. 2. The cache control unit 11 pre-fetches an instruction from the main memory to the instruction cache 11a. The instruction of the instruction cache 11a is decoded in the decoder 14 through the instruction buffer 13. In this case, if the instruction is a branching instruction, the instruction is stored in the branch reservation station 15 and also is registered in the instruction completion management unit 19.

If the instruction is an instruction other than a branching instruction (for example, a register calculation instruction, an address calculation instruction, etc.), the instruction is stored in the miscellaneous reservation station 15-1. The instruction issues a variety of execution requests for fixed-point execution, floating-point execution, load/store operation, and the like, to the execution unit 16, or issues a load request to read data from the main memory to a register in the execution unit 16 or a store request to write data from the register to the main memory.

As shown in Fig. 1, the branch prediction device 30 of this preferred embodiment comprises a branch history storage device 31 for storing branch history information in the format shown in Fig. 3, according to the information of the branching instruction completion report 15a from the branch reservation station 15, and an error (failure) detection unit 32 for detecting the existence/non-existence of an error by a parity check or another method when accessing the branch history storage device 31.

The branch history storage device 31 forms a set - associative type association storage mechanism composed of storage media, such as random-access memory (RAM), etc.

The branch prediction device 30 further comprises a storage device reference (retrieval) index generation unit 37 for generating an index for accessing the branch history storage device 31, a reference (retrieval) index storage unit 33 for storing an index value when an error occurs, a storage device writing index generation unit 36 for generating a writing index from an index for writing nullification data when there is branching instruction completion information from the branch reservation station 15 or when an error occurs, a storage device all-index (generation) counter 34 for generating an index for erasing an entire region of the branch history storage device 31 when an error occurs, a selector 35 for selecting the respective outputs of the reference index storage unit 33 and the storage device all-index counter 34, a selector 38 for selecting the respective outputs of the storage device writing index generation unit 36 and the storage device reference index generation unit 37 and accessing the branch history storage device 31, an erasure method setting register 40 for externally designating the type of erasure operation when an error occurs, a selection signal generation unit 41 for outputting a partial erasure selection signal 41a or an entire erasure selection signal 41b, in order to switch the selector 35, based on the setting state of this erasure method setting register 40, and a writing designation (instruction) signal generation unit 39 for generating a data writing signal for writing data into the branch history storage device 31.

In this preferred embodiment, the erasure method setting register 40 can designate a process of erasing an entry (line) unit in which an error occurs, a process of erasing all the lines of the branch history storage device 31, or no operation. Information for selecting either a method of writing zero data or a method of operating a valid flag 31c, which is described later, as an erasure method, can also be set.

The failure detection unit 32 outputs an error occurrence signal 32a to the reference index storage unit 33 and the storage device all-index counter 34 when an error occurs, and also outputs a write permission signal 32b to the write designation signal generation unit 39. The selection signal generation unit 41 outputs a write permission signal 41c to the write designation signal generation unit 39 when erasing data when an error occurs.

An error information storage unit 50 for recording information about errors occurring in the branch history storage device 31 and an error information collection unit 60 are connected to the failure detection unit 32. The error information storage unit 50 is included in scan chain 51 composed of hardware circuits provided for each error type. The error information storage unit 50 holds information for each error type and outputs it to the outside.

Information about an error stored in the error information storage unit 50 includes the line address of a failed RAM medium (storing the access addresses of RAMs), failed data, the number of a failed RAM medium and the like.

A scan control unit 61, a frequency counter 62 and a circuit stoppage control unit 63 are connected to the error information collection unit 60. The error information collection unit 60 activates a scan chain 51 using the (error recovery) scan control unit 61 and collects error information from the error information storage unit 50. The circuit stoppage control unit 63 stops the operation of the entire circuit using the circuit stoppage control unit 63 when an error is reported from the failure detection unit 32 and an error occurrence frequency recorded by the frequency counter 62 exceeds a prescribed threshold value.

As described above, the branch history storage device 31 forms a set-associative type association storage mechanism composed of storage media, such as RAMs or the like. As shown in Fig. 3, a pair of a tag section 31a composed of a part of bits of the higher side (higher-order bits) of the address value of the branching instruction which is stored in the instruction completion management unit 19 and whose completion is reported from the branch reservation station 15, and a branch target address 31b indicating the branch target address actually branched to by the branching instruction, are related and stored in the branch history storage device 31. Each pair of this tag section 31a and the branch target address 31b is provided with a valid flag 31c indicating the validity/invalidity of the information pair, a parity bit (in this preferred embodiment, an even number parity), which is not shown in Fig. 3, and the like.

In Fig. 3, all entries of the branch history storage device 31 are physically stored in the RAM composing the branch history storage device 31. However, there is no need for the entries to be stored in the same RAM, and the entries can also be distributed among and stored in a plurality of different RAM devices.

If the number of available entries in the set-associative type branch history storage device 31 and the number of ways are n and w, respectively, each of the storage device writing index generation unit 36 and the storage device reference index generation unit 37 accesses each line of the branch history storage device 31 using the number (=log₂(n/w)) of bits of an index classified and extracted from the address value of the branching instruction.

In response to an instruction fetch request 17a from the instruction fetch control unit 17, each entry is accessed using an index composed of a part of bits of the address value of the branching instruction. If an entry whose tag section coincides with the tag section 31a is hit, the branch target address 31b of the entry is outputted as a branch prediction value. The instruction fetch control unit 17 can predict a branch by fetching data from the instruction cache 11a, using this branch target address 31b.

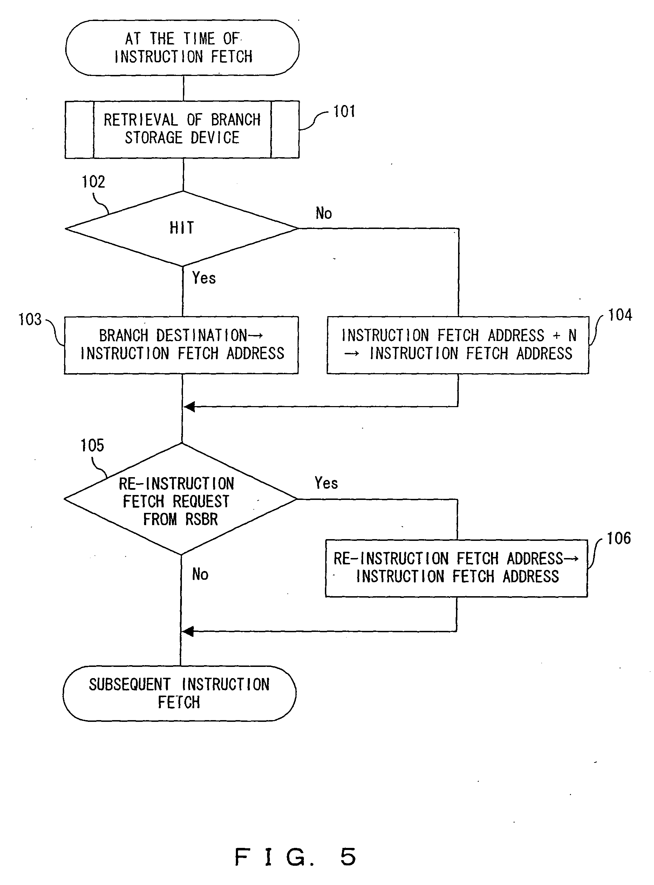

An example of the respective functions of the information processing device 10 and the branch prediction device 30 in this preferred embodiment is described with reference to the flowcharts shown in Figs. 5, 6 and 7.

Firstly, if in the execution process of the information processing device 10, an instruction is registered in the instruction completion management unit 19 and a completion report 15a is issued from the branch reservation station 15, both a branch instruction address included in this completion report 15a and information about a branch target address actually branched by the branching instruction are inputted to the storage device writing index generation unit 36 and the writing designation signal generation unit 39 of the branch prediction device 30, and are registered in the format shown in Fig. 3.

Then, if in the execution process of the information processing device 10, an instruction fetch request 17a is issued from the instruction fetch control unit 17 to the cache control unit 11, at the same time, the branch prediction device 30 refers to branch history storage device 31 using the fetch address of the requested instruction (step 101), and determines whether there is a hit (step 102).

Then, if there is a hit, that is, if the instruction is a branching instruction and there is a previous branch history entry in the branch history storage device 31, the branch target address 31b of the hit entry is outputted to the instruction fetch control unit 12 as a prediction value (step 103), and the instruction fetch control unit 17 instructs the cache control unit 11 to pre-fetch instructions after the branch target address 31b.

If there is no hit in step 102, an address value obtained by adding a prescribed increment value N (for example, N=32 bytes) to the instruction fetch address is designated as a new instruction fetch address (step 104).

Then, it is determined whether there is a re-instruction fetch request from the branch reservation station 15 (step 105). If there is a re-instruction fetch request (the pre-fetch of the branch target address, which is the result of branch prediction, is invalid), a subsequent instruction fetch is performed, using the re-instruction fetch address as a new instruction fetch address (step 106).

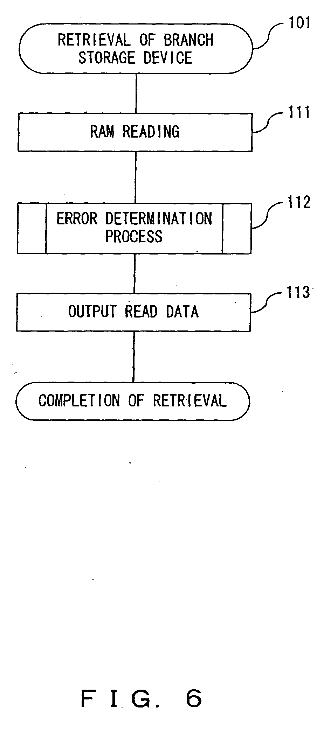

In the reference process of step 101, as shown in Fig. 6, the branch prediction device 30 refers to data from the branch history storage device 31 by generating an index value from the address value of the instruction fetch request 17a in the storage device reference index generation unit 37 and by providing the branch history storage device 31 with this index value through the selector 38 (step 111), performs an error determination process if necessary (step 112) and outputs the branch target address 31b as reading data if there is a hit (step 113).

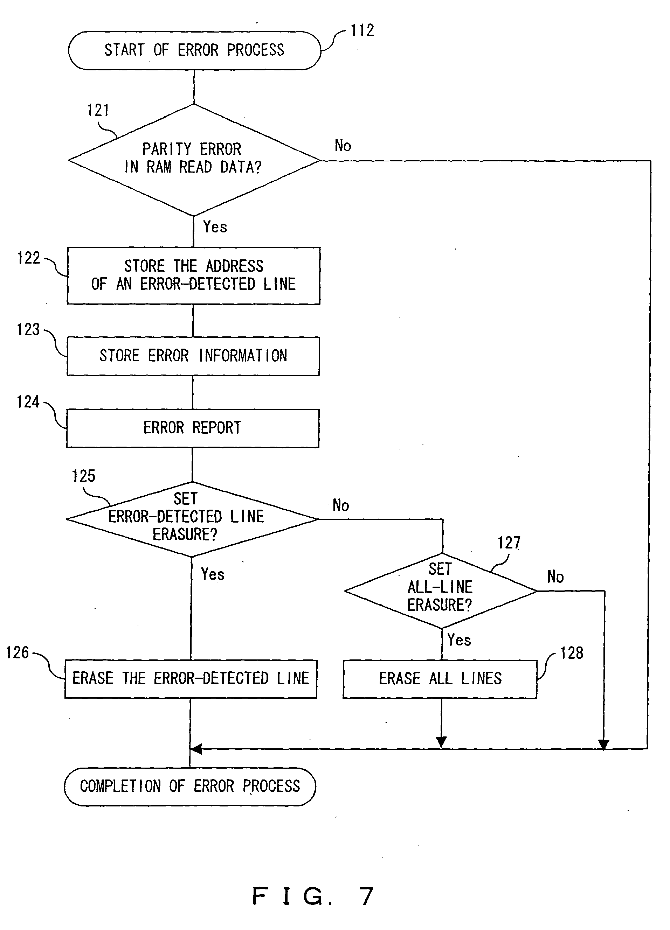

The error determination process of step 112 is performed as shown in the flowchart of Fig. 7. Specifically, it is determined whether there is a parity error in the read data from the branch history storage device 31 (step 121). If there is an error, the address (index) of an error-detected line is stored in the reference index (position information) storage unit 33, using the output of an error occurrence signal 32a outputted from the failure detection unit 32 (step 122), and error information is stored in the error information storage unit 50 (step 123). Then, an error report is issued to the error information collection unit 60 (step 124).

Then, the setting contents of the erasure method setting register 40 are checked (step 125). If the erasure is designated in units of lines, the index value stored in the reference index storage unit 33 is selected by the selector 35 and is set in the storage device writing index generation unit 36. Simultaneously, writing (erasure) is instructed to the writing designation signal generation unit 39, based on a write permission signal 32b outputted from the failure detection unit 32. In this case, erasure is performed by writing all zero data into the region in which a parity error occurs when reading (step 126). For this reason, in the error determination by even number parity, erasure is not determined to be an error. In this erasure method, the line can also be erased by setting a valid flag 31c to an invalid value.

If in step 125 it is determined that the erasure is designated in units of lines, it is further determined whether all-line erasure is instructed in the erasure method setting register 40 (step 127). If all-line erasure is instructed, an all-line index is generated one after another in the storage device all-index counter 34 and is set in the storage device writing index generation unit 36. Simultaneously, a write permission signal 41c is inputted from the selection signal generation unit 41 to the writing designation signal generation unit 39. By doing so, the all-line erasure of the branch history storage device 31 (the writing of zero data or a line nullification setting by the valid flag 31c) is performed (step 128).

Furthermore, if in step 127 it is determined that all-line erasure is not instructed, the error process is terminated without performing the erasure operation. The error information collection unit 60 activates the scan chain 51 by the scan control unit 61, collects error information stored in the error information storage unit 50 and outputs the error information to the outside. If the value of an error occurrence frequency stored in the frequency counter 62 exceeds a prescribed threshold value, the error information collection unit 60 stops the operation of the peripheral circuit of the branch history storage device 31 by the circuit stoppage control unit 63.

A parity error in a reading access to the branch history storage device 31 affects the success rate of branch prediction, that is, affects only the performance of the information processing device 10 and does not become a fatal error which disables the usual use of the information processing device 10. However, when detecting an error, the information processing device 10 issues an error detection report or partially stops the circuit, and collects information about the error by scanning.

Fatal errors, errors not affecting the usual use and the like constitute a scan chain for each error type. If a specific type of error occurs, only the scan chain of the error type stops a usual clock and performs a scan.

As described above, an error of the branch history storage device 31 is not fatal, but affects the performance of the information processing device 10. However, in this preferred embodiment, since a line in which a parity error is detected is erased by writing zero data (0-write) or the like, an error is prevented from occurring every time there is an access to a line in which a parity error occurs, for example, due to a software error or the like.

The error of the branch history storage device 31 does not affect its usual use and simply degrades its performance. As long as an error is once reported, there is no problem if the failed point is positively erased. By doing so, the occurrence of a large-scale error recovery covering the entire information processing device 10 or the like can be avoided.

As a result, performance degradation due to an error collecting operation being performed every time an error occurs and the stoppage of the entire information processing device 10 by the circuit stoppage control unit 63 due to the fact that the error frequency recorded on the frequency counter 62 exceeds a prescribed threshold value, can be avoided.

Since the region erasure of an error detected line is performed by erasure by zero data writing or by nullification by the writing of the valid flag 31c, an error detected region can be prevented from becoming unable to be used, and the serviceability of the branch history storage device 31 does not degrade.

Specifically, the performance degradation of the information processing device 10 due to an error of the branch history storage device 31 can be prevented without causing serviceability degradation of the branch history storage device 31.

By providing an erasure method setting register 40, a variety of erasure methods, such as erasure in units of lines, all-line erasure, entire RAM erasure, no erasure and the like, can be selected for an error detected in branch storage device 31, depending on the setting contents of the erasure method setting register 40, a variety of countermeasures can be taken against a transitional or fixed reading error of the branch prediction device 30, in accordance with a variety of states in use of the information processing device 10 provided for the branch prediction device 30.

In order words, since the cause of an error cannot be completely clarified, by preparing a plurality of erasure methods, including the classification and determination of a fixed failure and selecting one of them, a more effective erasure method can be selected for each case. Therefore, reliability can be very greatly improved.

The present invention is not limited to the configurations described in the above-mentioned preferred embodiment, which is described to illustrate the principles of the invention.

According to the present invention, performance degradation of an information processing device due to transitional or fixed reading errors in a branch prediction device can be prevented without degrading the functioning of the branch prediction device provided for the information processing device.

A variety of countermeasures can be taken against the transitional or fixed reading error of the branch prediction device, in accordance with a variety of states of the information processing device installed in the branch prediction device.

## Claims

1. A branch prediction device (30), comprising:
a branch history storage device (31) for storing branch history information in order to predict branch behavior;
an error detection mechanism (32) for detecting a reading error in the branch history information; and
an erasure mechanism (36) for erasing the branch history information in which the reading error is detected or a storage region of said branch history storage device (31) including the branch history region.

2. The branch prediction device (30) according to claim 1, further comprising
a position information storage unit (33) for storing reading position designation information for designating the storage region in the branch history storage device (31), whose branch history information is read, wherein
if the reading error is detected when reading the branch history information, according to the reading position designation information stored in said position information storage unit (33), said erasure mechanism (36) erases the branch history information in which the reading error is detected or the storage region including the branch history information, using the reading position information stored in said position information storage unit (33).

3. The branch prediction device (30) according to claim 1 or 2, wherein
said erasure mechanism (36) erases the entire storage region of the branch history storage device (31) in which the reading error is detected.

4. The branch prediction device (30) according to claim 1, 2 or 3, wherein
said erasure mechanism (36) erases the branch history information by writing zero data into the storage region of the branch history information in which the reading error is detected.

5. The branch prediction device (30) according to claim 1, wherein
said branch history storage device (31) is provided with discrimination information for determining whether each segment of the branch history information is valid or invalid, and said erasure mechanism (36) erases the branch history information by nullifying the discrimination information.

6. The branch prediction device (30) according to claim 1 or 2, further comprising
an erasure operation control mechanism for externally selecting for said erasure mechanism (36) one of three operations: a first operation of selectively erasing the storage region of the branch history information in which the reading error is detected; a second operation of erasing the entire storage region of the branch history storage device (31) in which the reading error is detected; and a third operation of stopping the erasure of the branch history information in which the reading error is detected.

7. The branch prediction device (30) according to claim 1, further comprising
an erasure operation control mechanism for externally selecting for said erasure mechanism (36) one of two methods for erasing the storage region of the branch history information in which the reading error is detected: a first method for erasing the branch history information by writing zero data; and a second method for erasing the branch history information by nullifying discrimination information for determining whether each segment of the branch history information is valid or invalid.

8. A method for controlling a branch history prediction device which comprises a branch history storage device (31) for storing branch history information in order to predict branch behavior and an error detection mechanism (32) for detecting a reading error of the branch history information, comprising:
a first step of detecting the reading error of the branch history information; and
a second step of erasing the branch history information in which the reading error is detected.

9. The method according to claim 8, wherein
said second step comprises either: erasing the branch history information in which the reading error is detected, or erasing a storage region including the branch history information, using reading position information designating the storage region including the branch history information.

10. The method according to claim 8 or 9, wherein
in said second step, the branch history information is erased by erasing the entire storage region of the branch history storage device (31) in which the reading error is detected.

11. The method according to claim 8, 9 or 10, wherein
in said second step, the branch history information is erased by writing zero data into the storage region of the branch history information in which the reading error is detected.

12. The method according to claim 8 or 9, wherein
in said second step, the branch history information is erased using discrimination information for determining whether each segment of the branch history information is valid or invalid and by nullifying the discrimination information.

13. The method according to claim 8, wherein the branch prediction device further comprises a register for externally selecting one of three operations according to setting information of the register: a first operation of selectively erasing the storage region of the branch history information in which the reading error is detected; a second operation of erasing the entire storage region of the branch history storage device (31) in which the reading error is detected; and a third operation of stopping the erasure of the branch history information in which the reading error is detected; wherein, in the second step, one of the first, second and third operations is selectively performed by rewriting the setting information of said register.

14. The method according to claim 8, wherein the branch prediction device further comprises a register for externally selecting one of two methods for erasing the storage region of the branch history information in which the reading error is detected: a first method for erasing the branch history information by writing zero data and a second method for erasing the branch history information by nullifying discrimination information for determining whether each segment of the branch history information is valid or invalid; wherein, in the second step, either the first method or the second method is selectively performed by rewriting setting information of said register.

15. An information processing device, comprising:
an execution unit for executing an instruction;
an instruction fetch control unit for pre-fetching an instruction inputted to an operation unit; and
a branch prediction device (30) according to any of claims 1 to 7 for predicting the branch target address of a branch instruction if the instruction pre-fetched by said instruction fetch control unit is a branch instruction.

16. A method for countering errors in branch prediction, comprising steps of:
detecting a reading error in branch history information; and
erasing the branch history information in which the reading error is detected.
